# EUROPEAN PATENT APPLICATION

(11) **EP 1 221 785 A2**
(43) Date of publication of application: **10.07.2002**
(21) Application number: 01107518.1
(22) Date of filing: 26.03.2001
(51) Int. Cl.: H04L 12/24

(54) **Network management**

(30) Priority: 05.01.2001 US 755847
(71) Applicant: Redfern Broadband Networks Inc., Wilmington, County of Newcastle, Delaware, 19801 (US); Redfern Broadband Networks Pty Ltd, Eveleigh, New South Wales 1430 (AU)
(72) Inventor: Funk, David, Berowra Heights, New South Wales 2082 (AU)
(74) Representative: Kinzebach, Werner, Dr.

(57) **Abstract**

An optical network arranged in a manner such that in use at least one management function in the optical network is being effected utilising standard TCP/IP communication protocols.

## Description

### Field of the invention

The present invention relates broadly to an optical network, to a method of managing an optical network, and to a network element for use in an optical network.

### Background of the invention

There is a continuing demand for providing more and more user facilities in telecommunications equipment such as an optical network. Those facilities primarily relate to the management of the components within the optical network and the distribution and display of information such as alarm reports, audit logs, alarm logs, and status reports.

Whilst the provision of management facilities is clearly desirable, it does impose further complexity into the setting up of an optical network because of the need to develop and implement the necessary dedicated application programs and protocols.

At least preferred embodiments of the present invention seek to provide an alternative network management system.

### Summary of the invention

In accordance with a first aspect of the present invention there is provided an optical network arranged in a manner such that in use at least one management function in the optical network is being effected utilising standard TCP/IP communication protocols.

Accordingly, an operator of the optical network or components thereof can monitor the optical network from e.g. a standard desktop PC using existing application programs, i.e. without the need for implementing specialised tools. This can also facilitate better scalability of the optical network.

Preferably, the optical network is arranged in a manner such that, in use, the management function is being effected on a computer located within a network element of the optical network.

The management function may comprise the distribution of one or more of the group of alarm reports, audit logs, alarm logs, and status reports.

In one embodiment, the optical network is arranged in a manner such that, in use, the management function is being effected via e-mail messages transmitted using the standard TCP/IP protocols.

Alternatively or additionally, the optical network may be arranged in a manner such that, in use, the management function is being effected via an HTTP server incorporated in the network element and accessible via a conventional web browser.

The network element may comprise a network node or an in-line amplifier.

In accordance with a second aspect of the present invention there is provided a method of managing an optical network, the method comprising the step of effecting at least one management function of the optical network utilising standard TCP/IP communications protocols.

Preferably, the management function is being effected on a computer located within a network element of the optical network.

The management function may comprise the distribution of one or more of the group of alarm reports, audit logs, alarm logs, and status reports.

In one embodiment, the management function is being effected via e-mail messages transmitted using standard TCP/IP protocols.

Alternatively or additionally, the management function is being effected via an HTTP server incorporated in the network element and accessible via a conventional web browser.

The network element may comprise a network node or an in-line amplifier.

In accordance with a third aspect of the present invention there is provided a network element for use in an optical network, the network element comprising means for, in use, communicating using standard TCP/IP protocols to effect at least one management function in relation to the network element.

Preferably, the means for communicating comprises an SMTP server application.

Alternatively or additionally, the means for communicating may comprise an HTTP server application.

The management function may comprise the distribution of one or more of the group of alarm reports, audit logs, alarm logs, and status reports.

The network element may be in the form of a network node or an in-line amplifier.

### Brief description of the drawings

Preferred forms of the present invention will now be described, by way of example only, with reference to the accompanying drawings.

Figure 1 is a schematic diagram illustrating an optical network embodying the present invention.

Figure 2 is a schematic diagram illustrating another optical network embodying the present invention.

Figure 3 is an example screen shot illustrative of a management display screen embodying the present invention.

Figure 4 is a schematic diagram illustrating the functional modules of a metro hub embodying the present invention.

Figure 5 is a schematic diagram illustrating the connectivity of a management network embodying the present invention.

### Detailed description of the embodiments

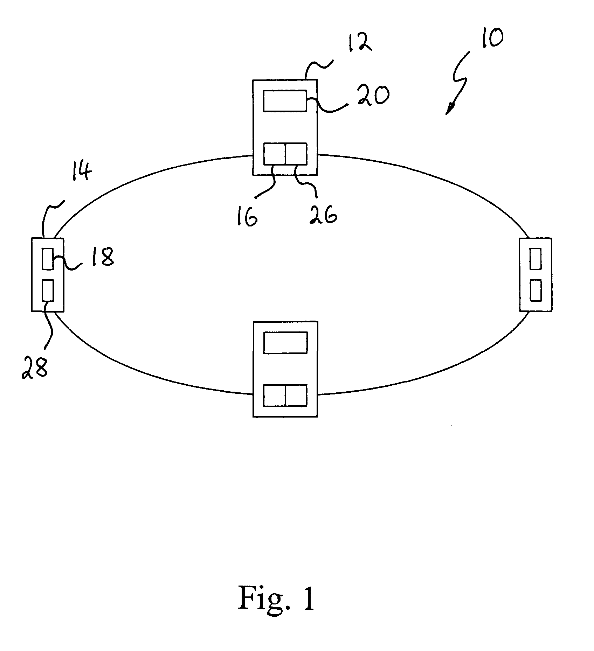

In figure 1, an optical network in the form of a ring network 10 comprises a plurality of network elements, including a network node 12 which interfaces to subscribers of the ring network 10, and an in-line amplifier unit 14.

The network node 12 and amplifier unit 14 each incorporate HTTP server application units 16, 18 respectively, which are accessible through a desktop PC-type interface 20 incorporated within the network node 12.

Accordingly, a user can monitor and control at least some of the functions and components incorporated in the node 12 and amplifier unit 14 utilising standard TCP/IP communication protocols. This avoids the need for implementing specialised tools within the ring network 10 for those monitoring and controlling functionalities.

The network node 12 and amplifier unit 14 further comprise email application units 26, 28 respectively. The email application units 26, 28 are arranged in a manner such that status reports on components incorporated in the network node 12 and amplifier unit 14 respectively are being emailed to the user (i.e. to PC-type interface 20), thereby e.g. alerting the user to failures in certain of those components. Again, the email messages are being communicated using standard TCP/IP protocols.

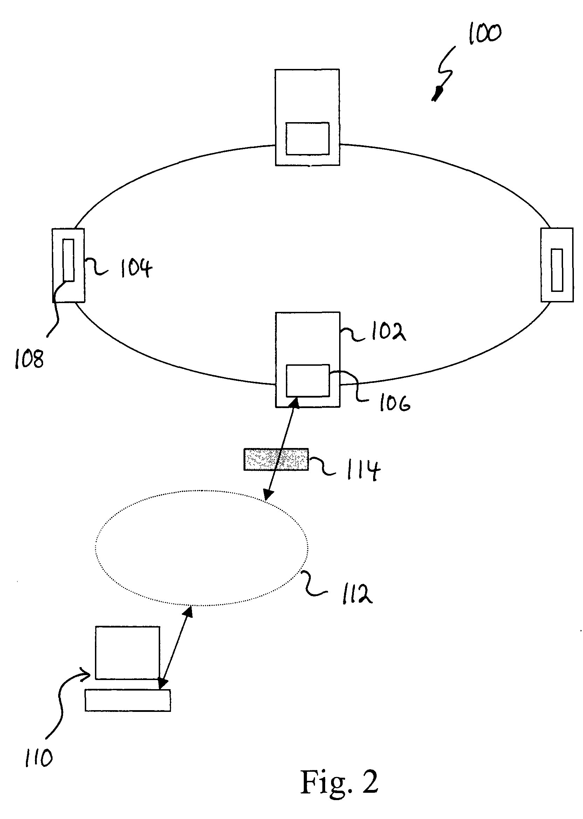

In another embodiment of the present invention shown in Figure 2 a ring network 100 comprises a plurality of network elements, including network nodes, e.g. 102 which interface to subscribers of the ring network 100, and in-line amplifier units e.g. 104.

Each of the network nodes e.g. 12 and amplifier units e.g. 104 incorporates HTTP server application units, e.g. 106, 108.

Management of the ring network 100 is implemented by utilising a management channel connecting all of the HTTP server application units e.g. 106, 108, using TCP/IP protocols for communication.

Each of the HTTP server application units e.g. 106, 108 have typical communication characteristics such as routing capability to pass-through communications directed to other HTTP server application units and to process communications intended for itself. Each HTTP server application unit is identifiable through a unique address within the TCP/IP protocol communication network.

In the embodiment shown in Figure 2 a remote management station 110 is provided for centralised management of the ring network 100. Since the management channel of the ring network 100 utilises TCP/IP protocols for communication, the management station 110 can be remotely connected to any one of the network elements of the ring network 100 through the internet 112. In such an embodiment, suitable firewall protection 114 should be provided at the HTTP server application unit 106 incorporated within the network node 102 to which the management station 110 is connected in the embodiment shown in Figure 2. This ensures that the network is completely isolated from the publicly accessible internet 112.

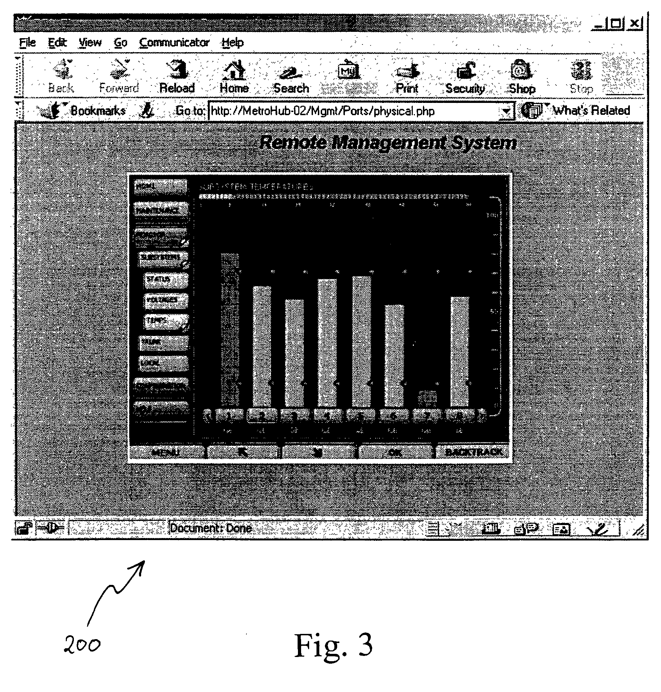

Figure 3 shows an example screen shot 200 illustrative of a management display screen presented to a user at the remote management station 110.

In the described embodiments, the optical ring network comprises a Management Network which overlays the physical and logical topology of the data communication network. The management network enables all Managed Network Elements within the network to be monitored and/or controlled from a Management Terminal.

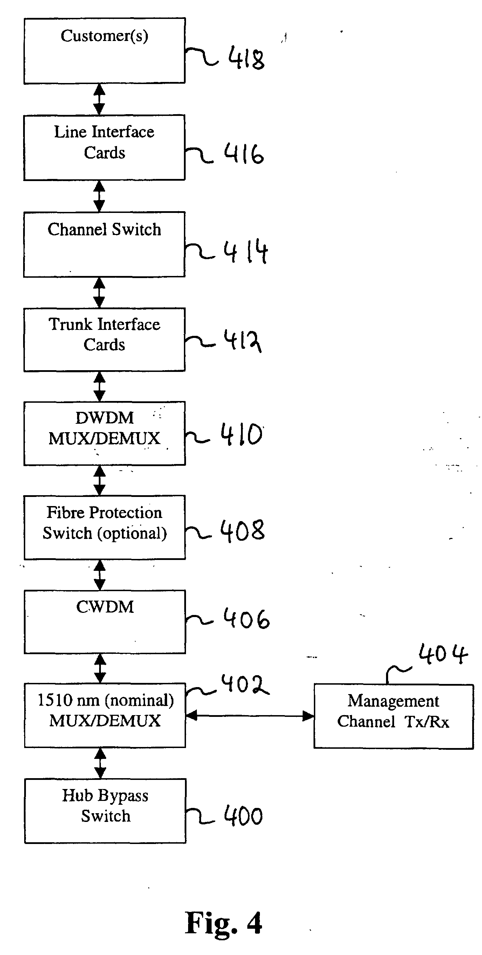

The Managed Network Elements may comprise e.g. a metro hub, a core hub or a line amplifier. Figure 4 shows a block diagram illustrating the various functional modules at e.g. a metro hub.

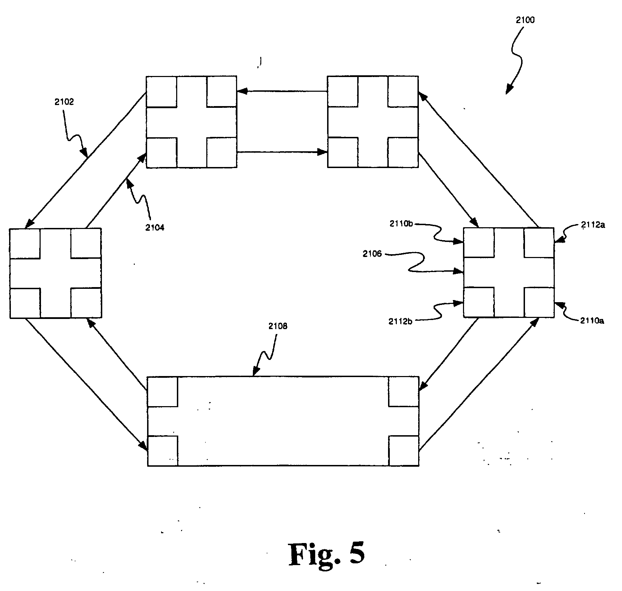

The logical connectivity of the Management Network 2100 is shown in Figure 5. The Management Network 2100 comprises two logical channels counter-propagating within the network. The use of two counter-propagating channels ensures that communication of management information between any pair of network elements is not interrupted in the case of any single failure such as e.g. a fibre cut. Each counter-propagating channel consists of a set of point-to-point links, e.g. 2102, 2104, connecting adjacent Managed Network Elements, e.g. 2106. Thus each Managed Network Element 2106 comprises two management receivers 2110*a*, 2110*b* and two management transmitters 2112*a*, 2112*b*. Some terminal equipment, e.g. a Core Hub 2108, may contain multiple Managed Network Elements, in which case the connectivity between these elements is effected internally, and the terminal equipment still has only two sets of management transmitters and receivers.

Within each Managed Network Element, the management signals are multiplexed and demultiplexed with the data signals on each fibre by the Management MUX/DEMUX Units 402 (see Figure 4).

Advantageously, since the management channel connections e.g. 2102, 2104, are established between adjacent Managed Network Elements, they are fully regenerated at each Managed Network Element, and do not require optical amplification.

The management channel connections may comprise signals transmitted outside the gain bandwidth of conventional optical amplifiers, e.g. at a wavelength of around 1510 nm.

Advantageously, the two counter-propagating management signals 2102, 2104 in each link may be transmitted bi-directionally in the same fibre.

In order to avoid problems with backscattered or reflected light from one management signal, e.g. 2102, interfering with the counter-propagating management signal, e.g. 2104, the two management channels may be transmitted on different wavelengths, e.g. 1505 nm and 1515 nm.

The management channel may comprise relatively low bit-rate signals, e.g. around 100 Mb/s, so that dispersion and power budget for the management signals do not restrict the maximum distance between Managed Network Elements.

The transmission format of the management signals may comprise local-area network standards, e.g. full-duplex 100 Mb/s Fast Ethernet, so that the management channel connections may be implemented using low-cost commodity hardware.

Advantageously, the Management multiplexer/de-multiplexer (MUX/DEMUX) Units 402 (see Figure 4) should present minimal insertion loss to non-management channels, in order to maximise the power budget available for data signal transmission.

It will be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

In the claims that follow and in the summary of the invention, except where the context requires otherwise due to express language or necessary implication, the word "comprising" is used in the sense of "including", i.e. the feature specified may be associated with further features in various embodiments of the invention.

## Claims

1. An optical network arranged in a manner such that in use at least one management function in the optical network is being effected utilising standard TCP/IP communication protocols.

2. A network as claimed in claim 1, wherein the optical network is arranged in a manner such that, in use, the management function is being effected on a computer located within a network element of the optical network.

3. A network as claimed in claims 1 or 2, wherein the management function comprises the distribution of one or more of the group of alarm reports, audit logs, alarm logs, and status reports.

4. A network as claimed in any one of the preceding claims, wherein the optical network is arranged in a manner such that, in use, the management function is being effected via e-mail messages transmitted using the standard TCP/IP protocols.

5. A network as claimed in any one of the preceding claims, wherein the optical network may be arranged in a manner such that, in use, the management function is being effected via an HTTP server incorporated in the network element and accessible via a conventional web browser.

6. A network as claimed in any one of the preceding claims, wherein the network element comprises a network node or an in-line amplifier.

7. A method of managing an optical network, the method comprising the step of effecting at least one management function of the optical network utilising standard TCP/IP communications protocols.

8. A method as claimed in claim 7, wherein the management function is being effected on a computer located within a network element of the optical network.

9. A method as claimed in claims 7 or 8, wherein the management function comprises the distribution of one or more of the group of alarm reports, audit logs, alarm logs, and status reports.

10. A method as claimed in any one of claims 7 to 9, wherein the management function is being effected via e-mail messages transmitted using standard TCP/IP protocols.

11. A method as claimed in any one of claims 7 to 10, wherein the management function is being effected via an HTTP server incorporated in the network element and accessible via a conventional web browser.

12. A method as claimed in any one of claims 7 to 11, wherein the network element may comprise a network node or an in-line amplifier.

13. A network element for use in an optical network, the network element comprising means for, in use, communicating using standard TCP/IP protocols to effect at least one management function in relation to the network element.

14. A network element as claimed in claim 13, wherein the means for communicating comprises an SMTP server application.

15. A network element as claimed in claims 13 or 14, wherein the means for communicating may comprise an HTTP server application.

16. A network element as claimed in any one of claims 13 to 15, wherein the management function comprises the distribution of one or more of the group of alarm reports, audit logs, alarm logs, and status reports.

17. A network element as claimed in any one of claims 13 to 16, wherein the network element is in the form of a network node or an in-line amplifier.
